# EUROPÄISCHE PATENTSCHRIFT

(11) **EP 2 152 601 B1**
(45) Veröffentlichungstag und Bekanntmachung des Hinweises auf die Patenterteilung: **24.10.2012**
(21) Anmeldenummer: 08749487.8
(22) Anmeldetag: 20.05.2008
(51) Int. Cl.: B65D 51/00, B65D 47/38, B65D 51/22, A61J 1/20, B01L 3/14

(54) **VERSCHLUSSKAPPE FÜR EIN BEHÄLTNIS ZUR AUFNAHME VON FLÜSSIGKEITEN, INSBESONDERE EINER ENTERALEN NÄHRLÖSUNG UND BEHÄLTNIS MIT EINER DERARTIGEN VERSCHLUSSKAPPE**
CLOSURE CAP FOR A CONTAINER FOR RECEIVING FLUIDS, PARTICULARLY AN ENTERAL NUTRIENT SOLUTION AND CONTAINER HAVING SUCH A CLOSURE CAP
COIFFE DE FERMETURE POUR RÉCIPIENT DESTINÉ À CONTENIR DES LIQUIDES, EN PARTICULIER UNE SOLUTION NUTRITIVE ENTÉRALE, ET RÉCIPIENT MUNI D'UNE TELLE COIFFE DE FERMETURE

(30) Priorität: 24.05.2007 DE 102007024539
(43) Veröffentlichungstag der Anmeldung: 17.02.2010
(73) Patentinhaber: Fresenius Kabi Deutschland GmbH, 61352 Bad Homburg v.d.H. (DE)
(72) Erfinder: BRANDENBURGER, Torsten, 61203 Reichelsheim (DE); GREIER, Gerhard, 61381 Friedrichsdorf (DE); RAHIMY, Ismael, 61169 Friedberg (DE)
(74) Vertreter: Fresenius Kabi Deutschland GmbH
(86) Internationale Anmeldenummer: PCT/EP2008/004016
(87) Internationale Veröffentlichungsnummer: WO 2008/141794

(56) Entgegenhaltungen:
- DE-A1- 19 615 422
- DE-A1- 19 858 237
- DE-A1-102004 033 205
- DE-T2- 60 004 082
- US-A- 2 289 677
- US-A- 4 328 802

## Beschreibung

Die Erfindung bezieht sich auf ein system untassend einen spike und eine Verschlusskappe für ein Behältnis zur Aufnahme von Flüssigkeiten, insbesondere ein Behältnis zur Aufnahme einer Flüssigkeit für die enterale Ernährung, das einen Deckelteil und einen Randteil aufweist. Darüber hinaus betrifft die Erfindung ein Behältnis zur Aufnahme einer Flüssigkeit für die enterale Ernährung, insbesondere ein BFS-Behältnis, mit einem derartigen system.

Als Blow-Fill-Seal-Verfahren (BFS-Verfahren) ist ein Verfahren bekannt, bei dem Behältnisse, beispielsweise Flaschen aus extrudiertem PE oder PP, in einem Arbeitsgang steril und pyrogenfrei in eine gewünschte Form geblasen und unmittelbar nach der Abkühlung mit einem sterilen Füllgut aseptisch befüllt und hermetisch verschlossen werden. Die nach dem Blasen-Füllen-Verschließen-Verfahren hergestellten Behältnisse, insbesondere Flaschen, werden auch als BFS-Behältnisse bezeichnet.

Wenn die bekannten BFS-Behältnisse zur Aufnahme von sterilen, medizinischen Flüssigkeiten, beispielsweise von enteralen Nährlösungen eingesetzt werden, benötigen die Behältnisse ein Verschlusskappensystem, dass ein Überführen der enteralen Nährlösung mittels eines Überleitgeräts zum Patienten erlaubt.

Zur Bereitstellung von enteralen Nährlösungen sind Nährlösungsbeutel bekannt, die über einen auch als Port bezeichneten Anschlussteil verfügen, an den ein Überleitgerät zum Zuführen der Nährlösung zum Patienten angeschlossen werden kann.

Die bekannten Überleitgeräte zum Zuführen der enteralen Nährlösung zum Patienten weisen eine Schlauchleitung auf, die an einem Ende mit einem Spike versehen ist, der an den Anschlussteil des Nährlösungsbeutels angeschlossen werden kann. Das andere Ende der Schlauchleitung ist mit einem Konnektor zum Anschluss einer enteralen Ernährungs-Sonde versehen.

Die bekannten Anschlussteile der bekannten Nährlösungsbeutel sind von einer Membran dicht verschlossen, die von dem Spike des Überleitgeräts beim Anschließen der Schlauchleitung durchstochen wird.

Aus der DE 20 2004 003 267 UI ist eine Verschlusskappe für ein BFS-Behältnis bekannt, die einen Deckelteil und einen Randteil aufweist, wobei in dem Deckelteil eine geschlitzte Membran eingesetzt ist, die das Einfüllen des Spike eines Überleitgeräts erlaubt. Die geschlitzte Membran sitzt bündig in dem Deckelteil der Verschlusskappe.

Die DE 198 58 237 A1 beschreibt ein gattungsgemäβes System mit einem Adapter für enterale Überleitsysteme. Es verfügt über ein Basisteil, das als Schraubkappe ausgebildet ist. Der Durchhang des Basisteils für eine dem Patienten zuzuführende Flüssigkeit wird von einer geschlitzten Scheibe aus flexiblem Material verschlossen. Dieses Scheibenventil öffnet sich beim Einführen eines Spikes. An einem oberen Rand weist der Adapter ein Aufnahmestück zur verdrehsicheren Aufnahme des Spikes auf.

Der Erfindung liegt die Aufgabe zugrunde, ein System umfassend einen Spike und eine Verschlusskappe für ein Behältnis zur Aufnahme von Flüssigkeiten, insbesondere ein BFS-Behältnis zur Aufnahme einer enteralen Nährlösung, bereit zu stellen, bei dem die Handhabung des Behältnisses beim Anschließen des Spike einer Schlauchleitung eines Überleitgeräts vereinfacht wird. Darüber hinaus ist eine Aufgabe der Erfindung, ein Behältnis zur Aufnahme von Flüssigkeiten, insbesondere ein BFS-Behältnis zur Aufnahme einer enteralen Nährlösung zu schaffen, das sich beim Anschließen des Spikes des Überleitgeräts einfach handhaben lässt.

Die Lösung dieser Aufgaben erfolgt erfindungsgemäß mit den in den Patentansprüchen 1 und 13 angegebenen Merkmalen. Bevorzugte Ausführungsformen der Erfindung sind Gegenstand der Unteransprüche.

Die Verschlusskappe für ein Behältnis zur Aufnahme von Flüssigkeiten, insbesondere ein BFS-Behältnis zur Aufnahme einer enteralen Nährlösung, die Teil des erfindungsgemäβen Systems ist, weist einen Deckelteil und einen Randteil auf, wobei in dem Deckelteil ein Entnahmeteil zum Entnehmen einer Flüssigkeit, insbesondere der enteralen Nährlösung angeordnet ist. Grundsätzlich kann die erfindungsgemäße Verschlusskappe neben dem Entnahmeteil auch ein Zuspritzteil zum Zuspritzen einer medizinischen Flüssigkeit in die enterale Nährlösung umfassen.

Der Entnahmeteil der Verschlusskappe weist einen Anschlussteil für einen Spike einer Schlauchleitung eines Überleitgeräts und einen Verschlussteil mit einer durchstechbaren Membran zum Verschließen der Ausnehmung des Anschlussteils auf.

Die Verschlusskappe zeichnet sich dadurch aus, dass der Entnahmeteil ein Aufnahmestück zur Aufnahme des Spike aufweist, das als ringförmiger den Spike dicht umschließender Körper ausgebildet ist, der an den oberen Rand des Anschlussteils angeschlossen ist und sich nach innen in den Randteil der Verschlusskappe erstreckt. Dadurch wird sichergestellt, dass beim Anstechen der Membran mit dem Spike die Verschlusskappe dicht verschlossen ist. Wenn der Spike an die Verschlusskappe angeschlossen ist, wird die Verschlusskappe zwar von der Membran dicht verschlossen, beim Anstechen der Membran besteht aber die Gefahr, dass die Membran nicht gegenüber dem Spike abdichtet. Der ringförmige den Spike dicht umschließende Körper stellt dann sicher, dass keine enterale Nährlösung aus der Verschlusskappe austritt.

Erfindungsgemäβ ist der ringförmige den Spike dicht umschließende Körper unter Bildung eines schmalen Spalts zwischen der Innenwand des Anschlussteils und der Außenwand des ringförmigen Körpers an den oberen Rand des Anschlussteils angeschlossen. Dadurch kann sich der ringförmige Körper beim Einführen des Spike leicht verformen, so dass der Spike von dem Körper dicht umschlossen wird. Die Wandstärke des ringförmigen Körpers ist derart bemessen bzw. das Material, aus dem der ringförmige Körper besteht, derart ausgewählt , dass dem ringförmigen Körper eine gewisse Elastizität verliehen wird.

Bei einer bevorzugten Ausführungsform hat der ringförmige den Spike dicht umschließende Körper einen nicht runden, insbesondere einen im wesentlichen rechteckförmigen Querschnitt, so dass der Spike, der ebenfalls einen rechteckförmigen Querschnitt hat, verdrehsicher in dem ringförmigen Körper gehalten wird. Grundsätzlich ist auch ein kreisringförmiger Querschnitt möglich, wobei der Spike dann aber nicht gegen Verdrehen gesichert ist.

Der Anschlussteil veist erfindungsgemäβ einen im wesentlichen zylindrischen Abschnitt auf, der sich von dem Deckelteil der Verschlusskappe nach außen erstreckt. Der ringförmige Körper, der den Spike dicht umschließt ist, an den oberen Rand des zylindrischen Abschnitts des Anschlussteils angeschlossen, wobei der ringförmige Körper sich von dem Deckelteil der Verschlusskappe nach innen erstreckt.

Eine weitere bevorzugte Ausführungsform sieht vor, dass der im wesentlichen zylindrische Abschnitt des Anschlussteils mit einem Außengewinde versehen ist. Dadurch ist es möglich, einen Spike, der über eine Schraubkappe verfügt, mit der Verschlusskappe fest zu verschrauben, so dass der Spike gegen Herausrutschen gesichert ist.

Zum aseptischen Verschluss der durchstechbaren Membran ist der Anschlussteil vorzugsweise mit einem als Originalitätsteil bezeichneten Abbrechteil verschlossen, der über eine Ringbruchzone an den oberen Rand des Anschlussteils angeschlossen ist. Nach dem Abbrechen oder Abdrehen des Abbrechteils liegt die Membran frei, so dass der Spike eingeführt werden kann.

Zur Verbesserung der Handhabung weist der Abbrechteil vorzugsweise Grifflaschen auf, die seitlich von dem Verschlussteil abstehen. Vorzugsweise sind die seitlichen Grifflaschen an einen zentralen tellerförmigen Abschnitt des Abbrechteils angeschlossen.

Die Grifflaschen erstrecken sich vorzugsweise bis zu dem Deckelteil der Verschlusskappe, so dass zwischen dem unteren Rand der Grifflaschen und dem Deckelteil nur ein schmaler Spalt verbleibt. Dadurch ist ausgeschlossen, dass sich die Schlauchleitung des Überleitgeräts zwischen den Grifflaschen und der Verschlusskappe verklemmen kann.

Bei einer weiteren besonders bevorzugten Ausführungsform weist der Verschlussteil einen im wesentlichen zylindrischen Abschnitt auf, der sich von dem Deckelteil der Verschlusskappe nach innen erstreckt. Die durchstechbare Membran sitzt bei dieser Ausführungsform in dem zylindrischen Abschnitt des Verschlussteils.

Der im wesentlichen zylindrische Abschnitt des Verschlussteils ist bei einer weiteren besonders bevorzugten Ausführungsform als ein die durchstechbare Membran übergreifender Bördelrand ausgebildet, der die Membran fest in der Ausnehmung des Verschlussteils verklemmt. Dadurch wird die Herstellung der Verschlusskappe vereinfacht. Zunächst wird die Membran in den zylindrischen Abschnitt des Verschlussteils eingesetzt, deren Rand dann umgebördelt wird. Beispielsweise kann der Rand des zylindrischen Abschnitts des Verschlussteils thermisch verformt werden.

Es ist aber grundsätzlich auch möglich, die durchstechbare Membran einschnappend in dem zylindrischen Abschnitt des Verschlussteils einzusetzen und/oder radial zu verklemmen.

Die Verschlusskappe des erfindungsgemäβen Systems kann in großen Stückzahlen kostengünstig als einstückiges Spritzgießteil aus Kunststoff hergestellt werden.

Das erfindungsgemäße Behältnis verfügt über das oben beschriebene erfindungsgemäße System Vorzugsweise ist das Behältnis als Flasche, insbesondere BFS-Flasche ausgebildet, wobei die Verschlusskappe dicht mit dem Behältnis verbunden ist. Dabei kann die Verschlusskappe mit dem Behältnis verklebt und/oder verschweißt oder als Schraubkappe ausgebildet sein.

Im Folgenden wird ein Ausführungsbeispiel der Erfindung unter Bezugnahme auf die Zeichnungen näher erläutert.

Es zeigen:
- Fig. 1: ein Ausführungsbeispiel der Verschlusskappe, die mit dem Abbrechteil verschlossen ist, in der Seitenansicht,
- Fig. 2: die Verschlusskappe von Fig. 1 in der Seitenansicht, wobei der Abbrechteil abgebrochen und der Spike einer Schlauchleitung eines Überleitgeräts mit der Verschlusskappe verschraubt ist,
- Fig. 3: einen Schnitt durch die Verschlusskappe von Fig. 2 entlang der Linie A-A,
- Fig. 4: einen Schnitt durch die Verschlusskappe von Fig. 2 entlang der Linie C-C,
- Fig. 5: die Verschlusskappe von Fig. 2 in perspektivischer Darstellung und
- Fig. 6: ein Ausführungsbeispiel eines erfindungsgemäßen Behältnisses mit der Verschlusskappe.

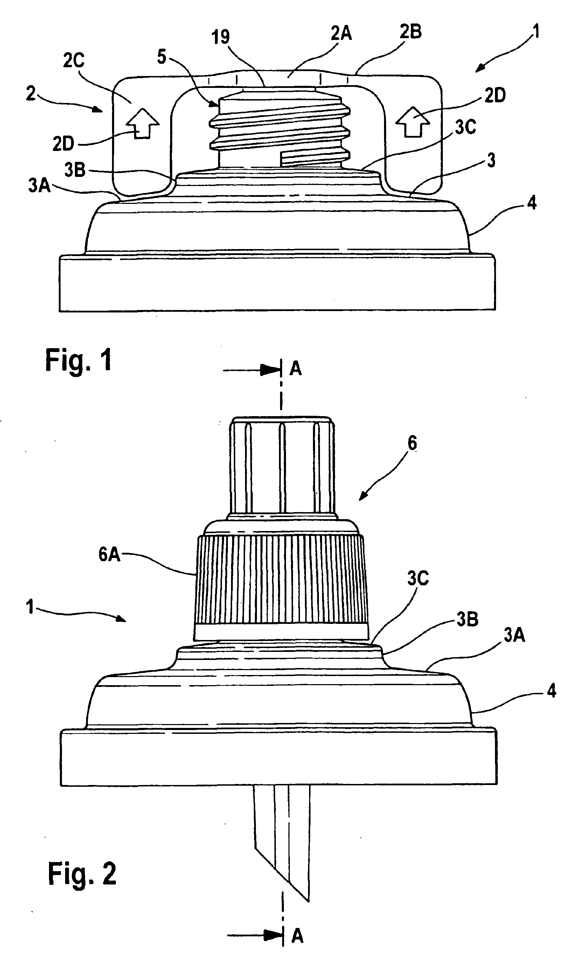

Fig. 1 zeigt die Verschlusskappe 1, in der Seitenansicht, die von einem Abbrechteil 2 dicht verschlossen ist. Die Verschlusskappe 1 weist einen Deckelteil 3 und einen Randteil 4 auf. Der Deckelteil 3 weist einen äußeren Abschnitt 3A auf, an den sich über einen nach außen gewölbten Abschnitt 3B ein innerer Abschnitt 3C anschließt. Der innere Abschnitt 3C des Deckelteils 3 ist mit einem Entnahmeteil 5 versehen, um eine Flüssigkeit, insbesondere eine enterale Nährlösung entnehmen zu können. Die enterale Nährlösung wird mit einem in Fig. 1 nicht dargestellten Spike entnommen, der nach dem Abbrechen des Abbrechteils 2 an die Verschlusskappe angeschlossen wird.

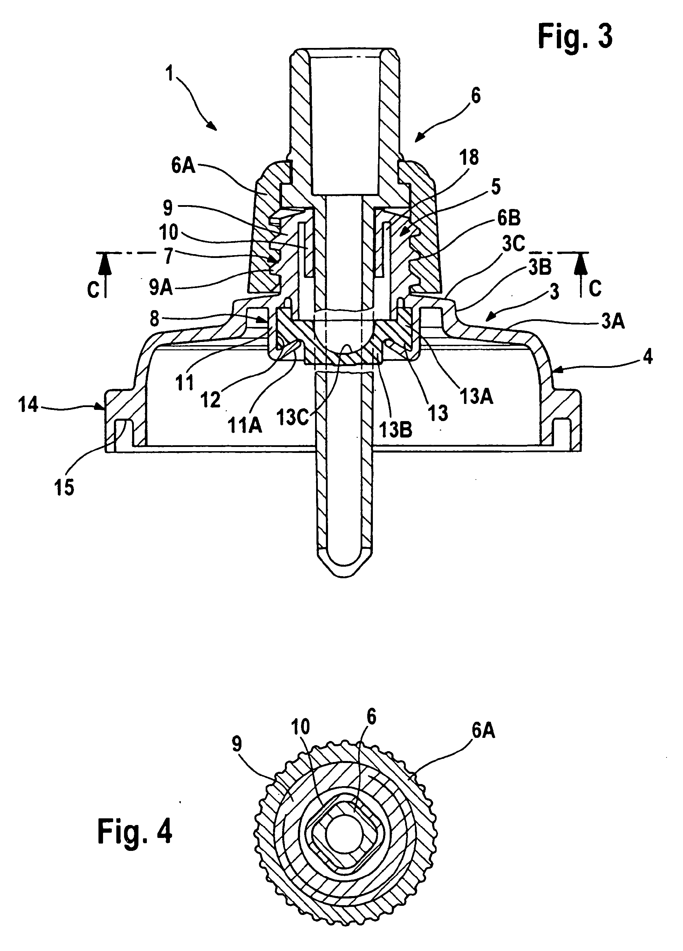

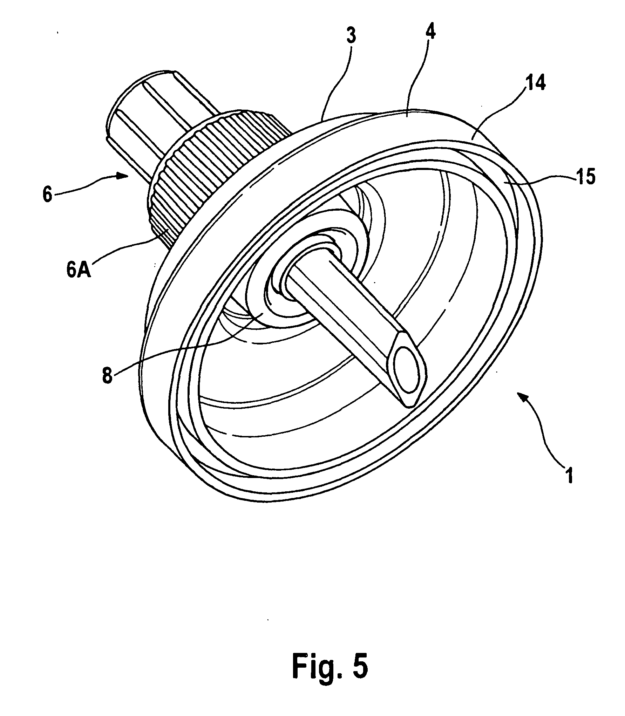

Nachfolgend wird die Verschlusskappe unter Bezugnahme auf die Fig. 2 bis 5 im Einzelnen beschrieben, wobei der Spike 6, der an das eine Ende einer nicht dargestellten Schlauchleitung eines nicht dargestellten Überleitgeräts angeschlossen ist, mit der Verschlusskappe verschraubt ist.

Der Entnahmeteil 5 zum Entnehmen der enteralen Nährlösung weist ein Anschlussteil 7 und einen Verschlussteil 8 auf. Der Anschlussteil 7 weist einen im wesentlichen zylindrischen Schnitt 9 auf, der sich von dem inneren Abschnitt 3C des Deckelteils 3 nach außen erstreckt. An den oberen Rand des zylindrischen Abschnitts 9 schließt sich ein ringförmiger Körper 10 an, der sich nach innen erstreckt. Der ringförmige Körper 10 hat einen im wesentlichen quadratischen Querschnitt, der dem Querschnitt des Spike 6 entspricht. Der ringförmige Körper 10, der den Spike dicht umschließt, ist an den oberen Rand des zylindrischen Abschnitts 9 derart angeformt, dass zwischen der Innenwand des zylindrischen Abschnitts 9 und der Außenwand des ringförmigen Körpers 10 ein schmaler Spalt 18 verbleibt.

Der Verschlussteil 8 der Verschlusskappe 1 weist einen im wesentlichen zylindrischen Abschnitt 11 auf, der sich von der Innenseite des inneren Abschnitts 3C des Deckelteils 3 nach innen erstreckt. In der Ausnehmung 12 des zylindrischen Abschnitts 11 des Verschlussteils 8 sitzt eine durchstechbare Membran 13. Die selbstabdichtende Membran 13 weist einen äußeren ringförmigen Abschnitt 13A und einen inneren Abschnitt 13B auf, der eine muldenförmige Vertiefung 13C hat und geschlitzt ist.

Bei der Montage wird nach dem Einsetzen der Membran 13 in den zylindrischen Abschnitt 11 deren unterer Rand 11A umgebogen, so dass der untere Rand 11A die Membran 13 untergreift. Dadurch wird der äußere Abschnitt 13A der Membran 13 klemmend in der Ausnehmung 12 des Verschlussteils 8 gehalten.

Der Randteil 4 der Verschlusskappe 1 weist einen unteren wulstförmigen Rand 14 auf, der an der Unterseite eine umlaufende Nut 15 hat. Die Verschlusskappe kann auf eine Flasche aufgesetzt werden, wobei der obere Rand des Flaschenhalses in die Nut des wulstförmigen Randes der Verschlusskappe greift.

Die Verschlusskappe 1 ist mit dem Spike 6 verschraubt. Der Spike 6 weist eine unverlierbar gesicherte Überwurfmutter 6A auf, die ein Innengewinde 6B hat, während die Außenwand des zylindrischen Abschnitts 9 des Anschlussteils 7 mit einem entsprechenden Außengewinde 9A versehen ist, so dass die Überwurfmutter 6A auf den Anschlussteil 7 der Verschlusskappe 1 aufgeschraubt werden kann.

Die Verschlusskappe 1 wird nicht nur durch die Membran 13 abgedichtet, sondern auch durch den ringförmigen Abschnitt 10, der den Spike 6 dicht umschließt. Dadurch wird sichergestellt, dass enterale Nährlösung selbst dann nicht austreten kann, wenn der Spike in den Entnahmeteil der Verschlusskappe eingeführt wird.

Vor der Entnahme der enteralen Nährlösung ist die Verschlusskappe 1 mit dem Abbrechteil 2 dicht verschlossen (Fig. 1). Der Abbrechteil 2 weist einen inneren tellerförmigen Abschnitt 2A auf, der über eine Ringbruchzone 19 mit dem oberen Rand des zylindrischen Abschnitts 9 des Anschlussteils 7 verbunden ist. An den inneren tellerförmigen Abschnitt 2A des Abrechteils 2 schließen sich über schmale Stege 2B zwei Grifflaschen 2C an, die zu beiden Seiten abstehen. Die Grifflaschen 2C sind als flache Körper ausgebildet, deren Breite der Breite des äußeren Abschnitts 3A des Deckelteils 3 entspricht. Die Grifflaschen 2C erstrecken sich bis an den äußeren Abschnitt 3A des Deckelteils 3, wobei zwischen dem unteren Rand der Grifflasche 2C und der Oberseite des äußeren Abschnitts 3A des Deckelteils 3 ein schmaler Spalt verbleibt. Beide Grifflaschen 2C weisen eine Aussparung 2D in Form eines nach außen weisenden Pfeils auf, um die Verschlusskappe als Entnahmeteil zu kennzeichnen.

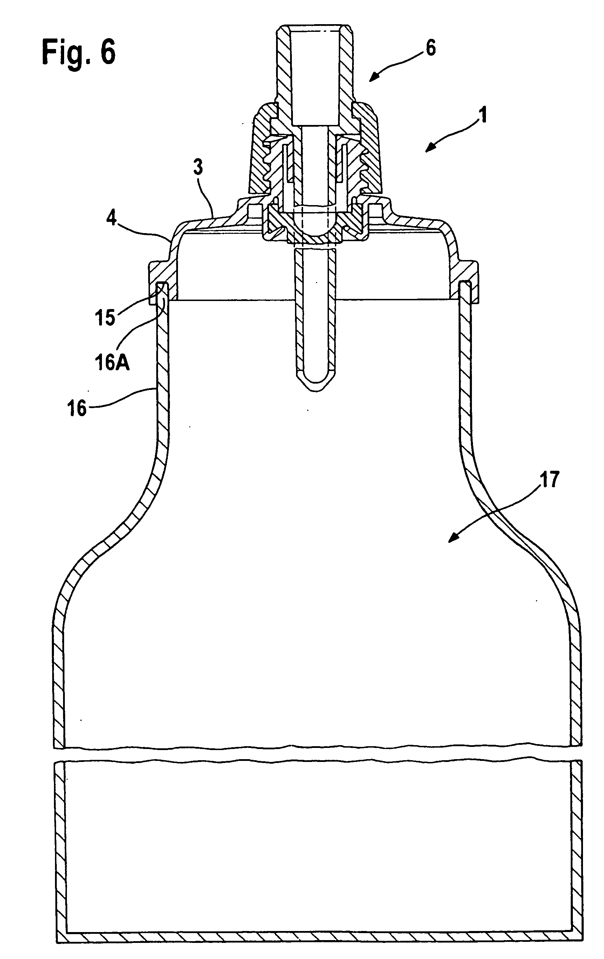

Fig. 6 zeigt die Verschlusskappe des erfindungsgemäβen Systems zusammen mit einem erfindungsgemäßen Behältnis, das im vorliegenden Ausführungsbeispiel eine BFS-Flasche ist. Die Verschlusskappe 1 sitzt fest auf dem Flaschenhals 16 der Flasche 17, die mit einer enteralen Nährlösung befüllt ist. Die Verschlusskappe 1 ist mit dem Hals 16 der Flasche verschweißt, wobei der obere Rand 16A des Flaschenhalses in die Nut 15 des wulstförmigen Randes 14 der Verschlusskappe greift.

## Patentansprüche

1. System umfassend einen Spike und eine Verschlusskappe für ein Behältnis zur Aufnahme von Flüssigkeiten, insbesondere ein Behältnis zur Aufnahme einer Flüssigkeit für die enterale Ernährung, mit einem Deckelteil (3) und einem Randteil (4), wobei der Deckeiteil (3) einen Entnahmeteil (5) mit einer Ausnehmung (12) zum Entnehmen einer Flüssigkeit aufweist, der einen Anschlussteil (7) mit einem Aufnahmestück (10) zur Aufnahme des Spike einer Schlauchleitung eines Überleitgeräts aufweist, und der Entnahmeteil (5) einen Verschlussteil (8) mit einer durchstechbaren Membran (13) zum Verschließen der Ausnehmung (12) des Entnahmeteils (5) aufweist, wobei der Anschlussteil (7) einen im wesentlichen zylindrischen Abschnitt (9) aufweist, der sich von dem Deckeiteil (3) nach außen erstreckt wobei das Aufnahmestück (10) an den oberen Rand des im wesentlichen zylindrischen Abschnitts (9) des Anschlussteils (7) angeformt ist und sich nach innen in den Anschlussteil erstreckt, wobei
das Aufnahmestück für den Spike als ringförmiger den Spike umschließender Körper (10) ausgebildet ist,
wobei der ringförmige den Spike umschließende Körper (10) derart an den oberen Rand des im wesentlichen zylindrischen Abschnitts (9) des Anschlussteils (7) angeschlossen ist und sich derart nach innen in den Anschlussteil erstreckt, dass beim Anstechen der durchstechbaren Membran (13) der ringförmige Körper (10) den Spike zum Verschließen der Ausnehmung (12) des Entnahmeteils (5) umschließ wobei der ringförmige den Spike umschließende Körper (10) unter Bildung eines schmalen Spalts (18) zwischen der Innenwand des Anschlussteils (7) und der Außenwand des Aufnahmestücks an den oberen Rand des Anschlussteils angeformt ist, **dadurch gekennzeichnet, dass** die Verschlusskappe nicht nur durch die Membran (13) sondern auch durch den ringförmigen den Spike dicht umschließenden Körper (10) abgedichtet ist, wenn der Spike in den Entnahmeteil (5) der Verschlusskappe eingeführt ist, und dass die Wandstärke des ringförmigen Körpers derart bemessen ist, dass dem ringsförmigen Körpen eine gewisse Elastizitit verlichen wird, so dass sich der ringförmige Körper beim Einfühun des Spikes leicht verformt, so dass der Spike von dem Körper dicht umschlossen wird.

2. System nach Anspruch 1, **dadurch gekennzeichnet, dass** der ringförmige en Spike dicht umschließende Körper (10) einen kreisringförmigen Querschnitt hat.

3. System nach Anspruch 1, **dadurch gekennzeichnet, dass** der ringförmige den Spike dicht umschließende Körper (10) einen nicht runden Querschnitt hat.

4. System nach Anspruch 3, **dadurch gekennzeichnet, dass** der ringförmige den Spike dicht umschließende Körper (10) einen im Wesentlichen rechteckförmigen Querschnitt hat.

5. System nach einem der Ansprüche 1 bis 4, **dadurch gekennzeichnet, dass** der im Wesentlichen zylindrische Abschnitt (9) des Anschlussteils (7) mit einem Außengewinde (9A) versehen ist.

6. System nach einem der Ansprüche 1 bis 5, **dadurch gekennzeichnet, dass** der Anschlussteil (7) mit einem Abbrechteil oder Abdrehteil (2) verschlossen ist, der über eine Ringbruchzone (19) an den oberen Rand des Anschlussteils angeschlossen ist.

7. System nach Anspruch 6, **dadurch gekennzeichnet, dass** der Abbrechteil (2) einen zentralen tellerförmigen Abschnitt (2A) aufweist, an den Grifflaschen (2C) angeschlossen sind, die seitlich von dem tellerförmigen Abschnitt (2A) abstehen.

8. System nach Anspruch 7, **dadurch gekennzeichnet, dass** sich die Grifflaschen (2C) bis zu dem Deckelteil (3) der Verschlusskappe erstrecken.

9. System nach einem der Ansprüche 1 bis 8, **dadurch gekennzeichnet, dass** der Verschlussteil (8) einen im wesentlichen zylindrischen Abschnitt (11) aufweist, der sich von dem Deckteil (3) nach innen erstreckt, wobei die durchstechbare Membran (13) in dem zylindrischen Abschnitt (11) des Verschlussteils (8) sitzt.

10. System nach Anspruch 9, **dadurch gekennzeichnet, dass** der untere Rand des im wesentlichen zylindrischen Abschnitts (11) des Verschlussteils (8) als die durchstechbare Membran (13) übergreifender Bördelrand (11A) ausgebildet ist.

11. System nach Anspruch 9 oder 10, **dadurch gekennzeichnet, dass** der Deckelteil (3) einen äußeren Abschnitt (3A) aufweist, an den sich über einen nach außen gewölbten Abschnitt (3B) ein innerer Abschnitt (3C) anschließt, wobei der im wesentlichen zylindrische Abschnitt (11) des Verschlussteils (8) an den inneren Abschnitt (3A) des Deckelteils (3) angeschlossen ist.

12. System nach einem der Ansprüche 1 bis 11, **dadurch gekennzeichnet, dass** die Verschlusskappe (1) ein einstückiges Spritzgießteil ist.

13. Behältnis, insbesondere BFS-Flasche, mit einem System nach einem der Ansprüche 1 bis 12.

## Claims

1. System comprising a spike and a closure cap for a container for holding liquids, in particular a container for holding a liquid for enteral nutrition, having a cover part (3) and an edge part (4), wherein the cover part (3) has a withdrawal part (5) having a recess (12) for withdrawing a liquid, said withdrawal part (5) having a connector part (7) having a holding piece (10) for holding the spike of a tube line of a transfer device, and the withdrawal part (5) has a closure part (8) having a pierceable membrane (13) for closing the recess (12) in the withdrawal part (5), wherein the closure part (7) has a substantially cylindrical portion (9) which extends outwardly from the cover part (3), wherein the holding piece (10) is integrally formed on the upper edge of the substantially cylindrical portion (9) of the closure part (7) and extends inwardly into the connector part, wherein the holding piece for the spike is in the form of an annular body (10) that encloses the spike, wherein the annular body (10) that encloses the spike is connected in such a way to the upper edge of the substantially cylindrical portion (9) of the connector part (7) and extends in such a way inwardly into the connector part that when the pierceable membrane (13) is pierced the annular body (10) encloses the spike for closing the recess (12) in the withdrawal part (5), wherein the annular body (10) that encloses the spike is integrally formed on the upper edge of the connector part, forming a narrow gap (18) between the inner wall of the connector part (7) and the outer wall of the holding piece, **characterized in that** the closure cap is sealed off not only by the membrane (13) but also by the annular body (10) that tightly encloses the spike, when the spike has been introduced into the withdrawal part (5) of the closure cap, and **in that** the wall thickness of the annular body is dimensioned such that the annular body is given a certain elasticity, such that the annular body deforms slightly when the spike is introduced, such that the spike is enclosed tightly by the body.

2. System according to Claim 1, **characterized in that** the annular body (10) that tightly encloses the spike has a cross section in the form of a circular ring.

3. System according to Claim 1, **characterized in that** the annular body (10) that tightly encloses the spike has a non-round cross section.

4. System according to Claim 3, **characterized in that** the annular body (10) that tightly encloses the spike has a substantially rectangular cross section.

5. System according to one of Claims 1 to 4, **characterized in that** the substantially cylindrical portion (9) of the connector part (7) is provided with an external thread (9A).

6. System according to one of Claims 1 to 5, **characterized in that** the connector part (7) is closed off with a break-off part or twist-off part (2) which is connected to the upper edge of the connector part via an annular break zone (19).

7. System according to Claim 6, **characterized in that** the break-off part (2) has a central plate-like portion (2A) to which there are connected gripping tabs (2C) that protrude laterally from the plate-like portion (2A).

8. System according to Claim 7, **characterized in that** the gripping tabs (2C) extend as far as the cover part (3) of the closure cap.

9. System according to one of Claims 1 to 8, **characterized in that** the closure part (8) has a substantially cylindrical portion (11) which extends inwardly from the cover part (3), wherein the pierceable membrane (13) sits in the cylindrical portion (11) of the closure part (8).

10. System according to Claim 9, **characterized in that** the lower edge of the substantially cylindrical portion (11) of the closure part (8) is in the form of a flanged edge (11A) that engages over the pierceable membrane (13).

11. System according to Claim 9 or 10, **characterized in that** the cover part (3) has an outer portion (3A) which is adjoined by an inner portion (3C) via an outwardly curved portion (3B), wherein the substantially cylindrical portion (11) of the closure part (8) is connected to the inner portion (3C) of the cover part (3).

12. System according to one of Claims 1 to 11, **characterized in that** the closure cap (1) is a one-piece injection-moulded part.

13. Container, in particular a BFS bottle, having a system according to one of Claims 1 to 12.

## Revendications

1. Système comprenant une pointe et un capuchon de fermeture pour un récipient destiné à contenir des liquides, en particulier un récipient destiné à contenir une solution entérale nutritive, comprenant une partie de couvercle (3) et une partie de bord (4), la partie de couvercle (3) présentant une partie de prélèvement (5) avec un évidement (12) pour prélever un liquide, laquelle partie de prélèvement présente une partie de raccord (7) avec une pièce de réception (10) pour recevoir la pointe d'une conduite tubulaire d'un appareil de transfert, et la partie de prélèvement (5) présentant une partie de fermeture (8) avec une membrane perçable (13) pour fermer l'évidement (12) de la partie de prélèvement (5), la partie de raccord (7) présentant une portion essentiellement cylindrique (9) qui s'étend vers l'extérieur depuis la partie de couvercle (3), la pièce de réception (10) étant façonnée sur le bord supérieur de la portion essentiellement cylindrique (9) de la partie de raccord (7) et s'étendant vers l'intérieur dans la partie de raccord,
la pièce de réception pour la pointe étant réalisée sous forme de corps (10) annulaire entourant la pointe,
le corps (10) annulaire entourant la pointe étant raccordé au bord supérieur de la portion essentiellement cylindrique (9) de la partie de raccord (7), et s'étendant vers l'intérieur dans la partie de raccord, de telle sorte que lors du perçage de la membrane perçable (13), le corps annulaire (10) entoure la pointe pour fermer l'évidement (12) de la partie de prélèvement (5), le corps (10) annulaire entourant la pointe étant façonné sur le bord supérieur de la partie de raccord en formant une fente étroite (18) entre la paroi interne de la partie de raccord (7) et la paroi externe de la pièce de réception,
**caractérisé en ce que** le capuchon de fermeture est rendu étanche non seulement par la membrane (13) mais aussi par le corps (10) annulaire entourant la pointe de manière hermétique, lorsque la pointe est introduite dans la partie de prélèvement (5) du capuchon de fermeture, et
**en ce que** l'épaisseur de paroi du corps annulaire est dimensionnée de telle sorte que le corps annulaire dispose d'une certaine élasticité de sorte que le corps annulaire, lors de l'introduction de la pointe, se déforme légèrement, de sorte que la pointe soit entourée de manière hermétique par le corps.

2. Système selon la revendication 1, **caractérisé en ce que** le corps (10) annulaire entourant la pointe de manière hermétique a une section transversale de forme annulaire circulaire.

3. Système selon la revendication 1, **caractérisé en ce que** le corps (10) annulaire entourant la pointe de manière hermétique a une section transversale non ronde.

4. Système selon la revendication 3, **caractérisé en ce que** le corps (10) annulaire entourant la pointe de manière hermétique a une section transversale essentiellement rectangulaire.

5. Système selon l'une quelconque des revendications 1 à 4, **caractérisé en ce que** la portion essentiellement cylindrique (9) de la partie de raccord (7) est munie d'un filetage externe (9A).

6. Système selon l'une quelconque des revendications 1 à 5, **caractérisé en ce que** la partie de raccord (7) est fermée avec une partie pouvant être rompue ou enlevée par rotation (2), qui est raccordée par le biais d'une zone de rupture annulaire (19) au bord supérieur de la partie de raccord.

7. Système selon la revendication 6, **caractérisé en ce que** la partie pouvant être rompue (2) présente une portion (2A) centrale en forme de plateau, sur laquelle sont raccordées des pattes de préhension (2C) qui font saillie latéralement depuis la portion (2A) en forme de plateau.

8. Système selon la revendication 7, **caractérisé en ce que** les pattes de préhension (2C) s'étendent jusqu'à la partie de couvercle (3) du capuchon de fermeture.

9. Système selon l'une quelconque des revendications 1 à 8, **caractérisé en ce que** la partie de fermeture (8) présente une portion essentiellement cylindrique (11) qui s'étend vers l'intérieur depuis la partie de couvercle (3), la membrane perçable (13) reposant dans la portion cylindrique (11) de la partie de fermeture (8).

10. Système selon la revendication 9, **caractérisé en ce que** le bord inférieur de la portion essentiellement cylindrique (11) de la partie de fermeture (8) est réalisé sous forme de bord roulé (11A) venant en prise par le dessus avec la membrane perçable (13).

11. Système selon la revendication 9 ou 10, **caractérisé en ce que** la partie de couvercle (3) présente une portion externe (3A) à laquelle se raccorde une portion interne (3C) par le biais d'une portion (3B) recourbée vers l'extérieur, la portion essentiellement cylindrique (11) de la partie de fermeture (8) étant raccordée à la portion interne (3C) de la partie de couvercle (3).

12. Système selon l'une quelconque des revendications 1 à 11, **caractérisé en ce que** le capuchon de fermeture (1) est une pièce moulée par injection d'une seule pièce.

13. Récipient, notamment flacon BFS, comprenant un système selon l'une quelconque des revendications 1 à 12.
